# DEMANDE DE BREVET EUROPEEN

(11) **EP 0 926 574 A1**
(43) Date de publication de la demande: **30.06.1999**
(21) Numéro de dépôt: 97122651.9
(22) Date de dépôt: 22.12.1997
(51) Int. Cl.: G04G 9/00

(54) **Ensemble d'affichage comprenant deux dispositifs d'affichage superposés**

(71) Demandeur: ASULAB S.A., CH-2501 Bienne (CH)
(72) Inventeur: Basturk, Naci, 2073 Enges (CH); Grupp, Joachim, 2003 Neuchâtel (CH); Gilomen, Beat, 2540 Grenchen (CH)
(74) Mandataire: Ravenel, Thierry Gérard Louis

(57) **Abrégé**

L'invention concerne un ensemble d'affichage comprenant deux dispositifs d'affichage superposés respectivement supérieur (24) et inférieur (26), caractérisé en ce que le dispositif d'affichage supérieur (24) comprend une double structure formée d'une cellule d'affichage (28) disposée au-dessus d'une valve optique (30), ladite double structure étant agencée pour que ladite cellule (28) et ladite valve (30) soient transparentes dans un premier état pour rendre visible le dispositif d'affichage inférieur (26), et que la cellule (28) affiche une information et que la valve (30) soit opaque et masque au moins partiellement le dispositif d'affichage inférieur (24) dans un deuxième état, des moyens de commande fournissant une tension de commande à la cellule (28) et à la valve (30) pour les faire passer du premier état au deuxième état et inversement.

## Description

La présente invention concerne un ensemble d'affichage comprenant au moins deux dispositifs d'affichage superposés et plus particulièrement un tel ensemble comportant des moyens permettant de faire apparaître sélectivement à un observateur un des dispositifs d'affichage à l'exclusion de l'autre.

La présente invention concerne également une pièce d'horlogerie comprenant un ensemble d'affichage de ce type et plus particulièrement un tel ensemble d'affichage dans lequel un dispositif d'affichage analogique est combiné à un dispositif d'affichage numérique.

Le brevet FR 2 462 283 décrit déjà une montre électronique comprenant une boîte dans laquelle sont ménagés à la fois un dispositif d'affichage analogique et un dispositif d'affichage numérique. Le dispositif d'affichage analogique comprend une aiguille des heures et une aiguille des minutes qui se déplacent de façon classique au-dessus d'un cadran, tandis que le dispositif d'affichage numérique comprend une cellule à cristaux liquides transparente disposée devant le dispositif d'affichage analogique qu'elle recouvre complètement. Dans ce brevet, cette cellule forme la glace de la montre. Le dispositif d'affichage numérique permet l'affichage de caractères alphanumériques, par exemple le jour de la semaine et le quantième en foncé sur fond clair ou le cas échéant en clair sur fond sombre, le cadran et les aiguilles du dispositif analogique étant toujours visibles à travers le dispositif d'affichage numérique. Lorsqu'aucune information n'est affichée par le dispositif d'affichage numérique, la montre présente donc l'aspect d'une montre classique, c'est-à-dire que les aiguilles et le cadran sont visibles complètement à travers le dispositif d'affichage numérique transparent formant la glace. En revanche, lorsque des informations sont affichées par le dispositif numérique, ces informations viennent s'afficher en superposition de celles du dispositif d'affichage analogique. Cela rend par conséquent la lecture des informations affichées par la cellule peu aisée et ce d'autant plus que la densité d'informations affichées par cette cellule est grande. La tendance actuelle étant à la réalisation de montres multifonctionnelles du type agenda, pager, etc. dans lesquelles le dispositif d'affichage numérique doit afficher simultanément un grand nombre d'informations, ce problème est d'autant plus critique.

La présente invention a pour but de remédier aux inconvénients de l'art antérieur susmentionné en fournissant un ensemble d'affichage comportant au moins deux dispositifs d'affichage superposés, respectivement inférieur et supérieur, dans lequel il est possible de faire apparaître à un observateur sélectivement des informations affichées par un des dispositifs d'affichage à l'exclusion de celles affichées par l'autre, et ceci avec une bonne lisibilité des informations affichées par le dispositif d'affichage en question.

La présente invention a également pour but de fournir un ensemble d'affichage dans lequel le dispositif d'affichage supérieur est un dispositif à cristaux liquides présentant un contraste d'affichage amélioré.

La présente invention a également pour but de fournir une pièce d'horlogerie équipée d'un tel ensemble d'affichage ayant un aspect esthétique amélioré.

A cet effet, l'invention a pour objet un ensemble d'affichage comprenant deux dispositifs d'affichage superposés respectivement supérieur et inférieur, caractérisé en ce que le dispositif d'affichage supérieur comprend une structure double formée d'une cellule d'affichage disposée au-dessus d'une valve optique, ladite structure double étant agencée de façon que ladite cellule et ladite valve soient transparentes dans un premier état pour rendre visible le dispositif d'affichage inférieur, et que la cellule affiche une information et que la valve soit opaque et réflective et masque au moins partiellement le dispositif d'affichage inférieur dans un deuxième état, des moyens de commande fournissant une tension de commande pour faire passer la cellule d'affichage et la valve optique du premier état au deuxième état et inversement.

Grâce à ces caractéristiques, il est possible d'utiliser sélectivement soit le dispositif d'affichage inférieur, soit le dispositif d'affichage supérieur, sans que l'un n'altère la qualité et la lisibilité de l'affichage de l'autre. En particulier, si l'on choisit d'utiliser le dispositif d'affichage inférieur, le dispositif d'affichage supérieur peut être commuté dans sont premier état dans lequel il est totalement transparent, de sorte que les informations affichées par le dispositif d'affichage inférieur sont parfaitement visibles. Si l'on choisit en revanche d'utiliser l'affichage supérieur, la valve optique est alors commutée dans le deuxième état dans lequel elle est devient opaque et réflective pour masquer totalement le dispositif d'affichage inférieur, tandis que la cellule du dispositif d'affichage supérieur peut afficher les informations désirées. Ces informations peuvent être affichées en clair sur fond sombre ou en foncé sur fond clair en fonction du type de cellule d'affichage utilisée. De cette manière, toute gêne dans la lecture des informations résultant de la superposition des dispositifs d'affichage inférieur et supérieur est éliminée, ce qui améliore notamment la lisibilité des informations affichées par le dispositif d'affichage choisi.

Selon un mode de réalisation avantageux, la cellule d'affichage et la valve optique sont dans un état transparent en l'absence de tension appliquée par les moyens de commande. Ainsi, l'information affichée par le dispositif d'affichage inférieur est visible en permanence sans que le dispositif d'affichage supérieur consomme d'énergie. Ceci est particulièrement avantageux dans le cadre d'une application à un objet portable telle qu'une montre-bracelet.

D'autres caractéristiques et avantages de la présente invention apparaîtront dans la description suivante d'un mode de réalisation préféré, présenté à titre d'exemple non limitatif en référence aux dessins annexés, dans lesquels :
- la figure 1 est une vue coupe d'une montre-bracelet équipée d'un ensemble d'affichage selon la présente invention, l'ensemble état commuté dans un premier état laissant apparaître le dispositif d'affichage inférieur;
- la figure 2 est une vue de dessus de la montre-bracelet représentée à la figure 1, l'ensemble d'affichage étant dans le même état de commutation qu'à la figure 1;
- les figures 3 et 4 sont des vues similaires respectivement à celles des figures 1 et 2, l'ensemble d'affichage étant commuté dans un deuxième état, et
- la figure 5 est une vue de dessus d'une montre-bracelet dans un mode de commutation particulier de l'ensemble d'affichage selon l'invention.

La description de l'invention va être faite dans le cadre d'une application à une pièce d'horlogerie telle qu'une montre-bracelet. Il va toutefois de soi que l'invention n'est pas limitée à cette application et qu'elle pourra être avantageusement utilisée dans le cadre de toute autre application nécessitant l'affichage d'informations tels que des panneaux publicitaires, des instruments de mesure, etc.

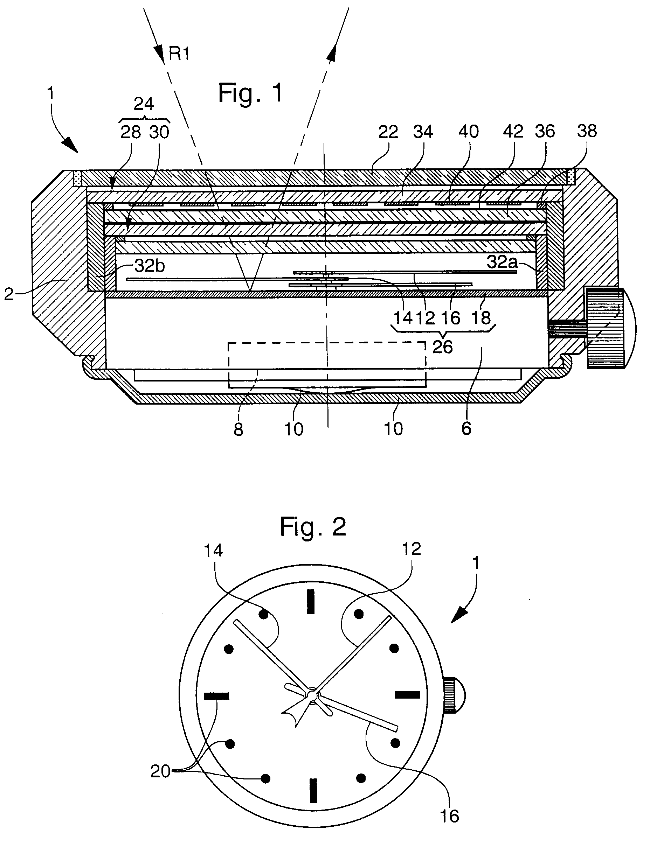

En se référant aux figures 1 à 4, on voit une pièce d'horlogerie du type montre-bracelet désignée par la référence générale 1. Cette montre 1 comprend classiquement une boîte 2 munie d'un fond 4 dans laquelle sont disposés un mouvement d'horlogerie électronique 6 et une pile 8 qui prend appui sur le fond 4 par l'intermédiaire d'un ressort de contact 10. Le mouvement 6 comprend des circuits électroniques garde-temps associés, via un circuit de commande à un dispositif d'entraînement (non représenté) d'une aiguille des secondes 12, d'une aiguille des minutes 14 et d'une aiguilles des heures 16 qui se déplacent au-dessus d'un cadran 18 qui porte des heures index 20 visibles sur la figure 2. La boîte 2 est également fermée de façon classique par une glace 22 recouvrant la totalité du cadran 18.

Selon l'invention, la montre 1 comprend en outre un ensemble d'affichage comprenant deux dispositifs d'affichage superposés respectivement supérieur 24 et inférieur 26. Dans l'exemple représenté, le dispositif d'affichage inférieur 26 comprend des moyens d'affichage de grandeurs temporelles, en particulier des moyens d'affichage analogiques de l'heure formés par les aiguilles 12, 14, 16 et le cadran 18.

Il va de soi que ce dispositif d'affichage inférieur 26 pourrait être formé par un dispositif d'affichage numérique quelconque, par exemple du type à cristaux liquides. Ce dispositif d'affichage 26 pourrait également comprendre une combinaison de moyens d'affichage analogiques et numériques tels que la combinaison décrite dans le brevet EP-B-0 078 237 au nom de la demanderesse ou encore un élément décoratif, par exemple une image, figure, etc.

Selon l'invention, le dispositif d'affichage supérieur 24 comprend une double structure formée d'une cellule d'affichage 28 disposée au dessus d'une valve optique 30, ce dispositif d'affichage 24 s'étendant entre le dispositif d'affichage inférieur 26 et la glace 22. Dans l'exemple représenté, ce dispositif d'affichage supérieur 24 recouvre la totalité de la surface du cadran 18.

Selon l'invention, le dispositif d'affichage supérieur 24 est agencé d'une part de façon que la cellule d'affichage 28, disposée entre la glace 22 et la valve optique 30, ainsi que cette dernière soient transparentes dans un premier état de commutation de la cellule 28 et de la valve 30, de façon à rendre visibles les informations affichées par le dispositif d'affichage inférieur 26, à savoir les aiguilles 12, 14 et 16 et le cadran 18 dans l'exemple représenté. Une telle configuration de l'ensemble d'affichage de l'invention est représentée à la figure 2.

D'autre part, le dispositif d'affichage supérieur 24 est agencé de façon que la cellule d'affichage 28 affiche une information, par exemple du type alphanumérique, et que la valve optique 30 soit opaque et masque au moins partiellement le dispositif d'affichage inférieur 26 dans un deuxième état de commutation.

La commutation de la cellule d'affichage 28 et de la valve optique 30 du premier état au deuxième état et inversement est réalisée par des moyens de commande (non représentés) intégrés au mouvement 6, ces moyens de commande étant reliés à la cellule 28 et à la valve 30 au moyen de connecteurs classiques 32a, 32b, pour leur fournir une tension de commande. Dans l'exemple représenté ces connecteurs 32a et 32b forment également un rehaut disposé entre le bord supérieur du cadran 18 et le bord inférieur de la valve optique 30 respectivement de la 28 cellule.

Selon un mode de réalisation particulier de l'invention représenté aux figures 1 à 4, la cellule 28 est une cellule d'affichage du type à cristaux liquides. La cellule comprend un substrat avant 34 transparent un substrat arrière 36 transparent, un cadre de scellement 38 formant des moyens d'espacement et de fermeture et délimitant avec les substrats 34 et 36 une cavité fermée dans laquelle se trouve une couche de cristaux liquides. Les faces en regard des substrats 34 et 36 comprennent des électrodes 40, 42 transparentes, réalisées par exemple en oxyde d'indium/étain. Dans l'exemple illustré, le substrat avant 34 porte des électrodes configurées en digits formés chacun de segments permettant d'afficher des caractères alphanumériques, tandis que le substrat arrière 36 porte une électrode s'étendant sur toute sa surface. Les électrodes 40 et 42 sont reliées au connecteur 32a par l'intermédiaire de plages de contact 44 situées à l'extérieur de la cavité.

Lorsque l'on applique ou que l'on supprime une tension entre l'électrode 42 et certaines des électrodes 40, on fait passer les cristaux liquides se trouvant entre ces électrodes 40, 42 alternativement d'un état absorbant à un état transparent ou inversement, selon le type de cristaux liquides en question et/ou la présence et la disposition de polariseurs associés à la cellule. Il est ainsi possible d'afficher des informations en clair sur fond sombre ou en sombre sur fond clair.

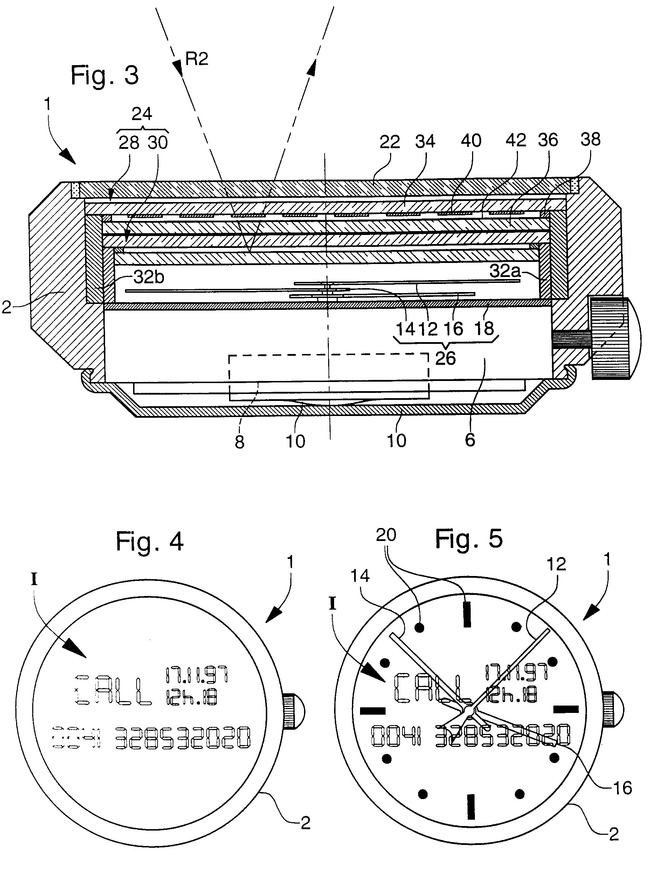

Dans l'exemple représenté, la cellule d'affichage 28 est une cellule à cristaux liquides de type nématique en hélice dont les surfaces extérieures respectives des substrats 34 et 36 sont munies de polariseurs (non représentés) à orientations croisées. Ainsi, la cellule 28 est totalement transparente (figures 1 et 2), c'est-à-dire dans le premier état de commutation, lorsqu'aucune tension n'est appliquée aux bornes de ses électrodes 40, 42 (état non commuté), et est absorbante ou diffusante (figures 3 et 4), c'est-à-dire dans le deuxième état de commutation, lorsqu'une tension est appliquée aux bornes de ses électrodes 40, 42 (état commuté).

Selon une variante de réalisation non représentée, l'orientation des polariseurs est parallèle, de sorte que la cellule est transparente dans son état commuté et absorbante dans son état non commuté.

Il va de soi que la cellule 28 peut être d'un autre type dès lors que dans un premier état de commutation, la cellule est transparente, et que dans un deuxième état de commutation, la cellule 28 est absorbante ou diffusante.

En effet, on pourra notamment choisir des cellules de type STN, Guest-Host (GH), à biréfringence contrôlée électriquement (BCE), à gel nématique et texture cholestérique, à cristaux liquides dispersés dans un polymère ferroélectrique, à diffusion dynamique (Dynamic Scattering).

La structure et le fonctionnement de ces types de cellules sont bien connus de l'homme du métier et ne seront pas décrits en détail dans cette description.

Pour une description complète de la structure et du fonctionnement d'une cellule de type STN, on se référera par exemple au brevet EP-A-0 131 216 qui est inclus ici par référence.

Pour une description complète de la structure et du fonctionnement d'une cellule de type GH, on se référera par exemple pour une cellule GH à contraste positif, c'est-à-dire qui affiche en foncé sur fond clair, au brevet US 4,257,682 qui est inclus ici par référence et pour une cellule GH à contraste négatif, c'est-à-dire qui affiche en clair sur fond foncé, à la publication de G.H. Heilmeier et L.A. Zanomi intitulée "Guest-Host Interaction in Nematic Liquid Crystals a New Electrooptical Effect" publiée dans Appl. Phys. Lett. vol. 13, No 3, pages 91-92, année 1968.

Pour une description complète de la structure et du fonctionnement d'une cellule de type BCE, on se référera par exemple au volume 3 de l'ouvrage intitulé "Liquid Crystals Applications and Uses" édité par B. Bahadur aux pages 254-300 qui est inclus ici par référence.

Pour une description complète de la structure et du fonctionnement d'une cellule de type à gel nématique et texture cholestérique, on se référera par exemple aux brevets US 5,188,760 et EP-A-0 451 905 qui sont inclus ici par référence.

Pour une description complète de la structure et du fonctionnement d'une cellule de type à cristaux liquides dispersés dans un polymère, plus connue sous sa dénomination anglo-saxonne "Polymer Dispersed Liquid Cristal" (PDLC), on se référera par exemple au brevet US 4,435,047 qui est inclus ici par référence.

On notera à ce propos que l'on choisira une cellule du type PDLC inverse si l'on souhaite obtenir une cellule transparente dans l'état non commuté, et opaque et réfléchissante dans l'état commuté.

Pour une description complète de la structure et du fonctionnement d'une cellule de type à diffusion dynamique, on se référera par exemple au volume 1 de l'ouvrage intitulé "Liquid Crystals Applications and Uses" édité par B. Bahadur aux pages 196-227 qui est inclus ici par référence.

Pour une description complète de la structure et du fonctionnement d'une cellule de type ferroélectrique, on se référera par exemple au volume 1 de l'ouvrage intitulé "Liquid Crystals Applications and Uses" édité par B. Bahadur aux pages 307-356 qui est inclus ici par référence.

Tous les types de cellules 28 décrits ci-dessus peuvent bien entendu être adressés passivement par un réseau d'électrodes matriciel ou encore adressés activement par des éléments non linéaires tels que des transistors en couches minces MIM, ou des diodes.

Dans l'exemple représenté, la valve optique 30 est formée d'une cellule électrolytique qui est transparente dans l'état non commuté (figures 1 et 2), et qui est opaque et réfléchissante dans l'état commuté (figure 2 et 4). Une telle valve 30 comprend une solution électrolytique d'un sel de métal dissous dans un solvant placé entre deux électrodes. Lorsque la valve 30 est dans un état commuté, le métal de la solution se dépose sur toute la surface de l'une des électrodes, et rend ainsi la valve 30 réfléchissante. Lorsque la valve 30 est dans un état non commuté, le métal se dissous à nouveau dans la solution, et la cellule redevient transparente. Une telle valve 30 est par exemple décrite dans la publication de J. Duchêne et al. intitulée "Electrolytic Display", publiée dans SID 1978 pages 34 à 37 qui est inclus ici par référence.

Bien entendu, selon une variante de réalisation, la valve optique 30 peut être formée d'une cellule électrocapillaire au mercure comprenant un film capillaire disposé entre deux substrats portant des électrodes, et qui, dans l'état commuté de la cellule, ne mouille pas la surface des substrats, de sorte que la cellule est transparente, et qui, dans l'état non commuté de la cellule, mouille la totalité de la surface des substrats pour la rendre réfléchissante. Une telle cellule est par exemple décrite dans le brevet US 4,583,824 qui est inclus ici par référence.

Selon encore une autre variante de réalisation, la valve optique 30 peut être formée d'un réflecteur commutable comprenant, en partant du côté de la glace 22, un empilement formé d'un polariseur, d'une cellule à cristaux liquides du type nématique en hélice (TN), d'une lame quart d'onde, et d'un film cholestérique tel que le réflecteur décrit dans la publication de T. J. Scheffer intitulée "Twisted Nematic Display with Cholesteric Reflector" publiée dans J. Phys. Appl. Phy., Vol. 8, 1975 qui est inclus ici par référence. De préférence, le polariseur est du type à efficacité de polarisation et transmission élevée par exemple tel que le polariseur commercialisé par la société Sanritsu, Japon sous la référence LLC₂5618SF. De façon avantageuse on pourra également intégrer la lame quart d'onde et le film cholestérique en un seul élément, par exemple tel que le produit TRANSMAX® commercialiser par Merck.

On notera également à ce propos que, selon une autre variante, la cellule à cristaux liquides du type nématique en hélice (TN) décrite dans la publication de Scheffer peut être remplacée par un dispositif d'affichage en couleurs tel que ceux décrits dans le brevet EP-A-0 600 349 qui est également inclus ici par référence.

Dans le cadre de l'invention, le réflecteur commutable est avantageusement transparent dans l'état non commuté, et réfléchissant dans l'état commuté.

Les valves optiques 30 qui viennent d'être décrites sont toutes transparentes dans l'état non commuté, et peuvent avantageusement être combinées à des cellules 28 qui sont également transparentes dans un état non commuté. Ainsi, dans le cadre de l'application à une pièce d'horlogerie 1, le dispositif d'affichage inférieur 26, à savoir les aiguilles 12, 14 et 16 et le cadran 18, peuvent être visibles en permanence avec une consommation d'énergie minimum, dans la mesure où seul le dispositif d'affichage inférieur 26 a besoin d'être alimenté, le dispositif d'affichage supérieur 24 n'étant alimenté que lorsque l'utilisateur souhaite lire une information délivrée par ce dispositif d'affichage 24.

Selon encore une variante de réalisation, la valve optique 30 peut être réalisée au moyen d'un film cholestérique commutable qui est transparent dans un état commuté, et opaque et réfléchissant dans un état non commuté. Un tel film cholestérique est par exemple décrit dans le brevet EP-A-0 643 121 qui est inclus ici par référence.

Dans le cas où la cellule 28 est du type diffusant à l'état commuté (cellule du type PDLC inverse, à gel nématique et à diffusion dynamique), c'est-à-dire lorsqu'elle affiche une information, la valve optique 30 peut être formée d'une cellule TN, STN, GH à contraste positif, BCE, ferroélectrique, du type PSCT (Polymer Stabilized Cholesteric Texture) ou encore tout autre cellule présentant un état transparent à l'état non commuté et opaque ou absorbant dans l'état commuté. Une cellule de type PSCT est décrite par exemple dans le brevet US 5,437,811).

L'ensemble d'affichage selon l'invention permet donc, en fonction de l'état de commutation et du type respectivement de la cellule 28 et de la valve optique 30, d'obtenir différentes configurations d'affichage.

En particulier, et en se référant au mode de réalisation de l'invention illustré aux figures 1 à 4 dans lequel la cellule 28 est formée d'une cellule TN à polariseurs croisés et la valve optique 30 est formée d'une cellule électrolytique, le dispositif d'affichage inférieur 26 est visible lorsque la cellule 28 et la valve 30 sont dans l'état non commuté. Dans cette configuration illustrée aux figures 1 et 2 la lumière, symbolisée par un rayon R1, traverse le dispositif d'affichage supérieur 24 et est totalement réfléchie sur le cadran 18 et les aiguilles 12, 14 et 16 pour traverser à nouveau le dispositif 24 sans être modifiée, aux pertes de transmission près, de sorte que l'observateur peut lire clairement les informations I affichées par le dispositif d'affichage inférieur 26.

En revanche, lorsque la cellule 28 et la valve 30 sont dans l'état commuté, le dispositif d'affichage inférieur 26 est masqué. Dans cette configuration illustrée aux figures 3 et 4, la lumière symbolisée par un rayon R2 traverse la cellule 28 en dehors des zones dans lesquelles les électrodes 40 et 42 sont non commutées, et est totalement réfléchie sur la surface de la valve 30 qui est alors réfléchissante pour traverser à nouveau la cellule 28 et faire apparaître à l'observateur des caractères alphanumériques 46 (figure 4) en foncé sur fond clair, ces caractères 46 étant définis par les zones de la cellule 28 dans lesquelles les électrodes 40 et 42 sont commutées. On notera que le dispositif d'affichage inférieur 26 est totalement masqué par la valve 30 et n'apparaît par conséquent pas à l'observateur. Toute interférence entre les informations affichées par les dispositifs d'affichage inférieur 26 et supérieur 24 pouvant altérer leur lisibilité est ainsi évitée.

On notera également que la cellule 28 selon l'invention fonctionne en mode réflectif en utilisant la valve 30 comme réflecteur qui, de part sa proximité avec la cellule 28, permet l'affichage d'informations avec un contraste amélioré.

Lorsque la cellule 28 est dans un état non commuté et que la valve 30 est dans un état commuté, aucune information n'est affichée par la cellule 28 et le dispositif d'affichage inférieur 26 est masqué par la valve 30 comme cela vient d'être décrit ci-dessus. Dans cette configuration non représentée au dessin, la montre 1 n'affiche aucune information.

Lorsque la cellule 28 est dans un état commuté et que la valve 30 est dans un état commuté, les informations affichées par les dispositifs d'affichage inférieur 26 et supérieur 24 sont visibles. Dans cette configuration non représentée à la figure 5, la montre 1 affiche en superposition des informations respectivement du dispositif d'affichage supérieur 24 et inférieur 26.

La commutation de la cellule 28 et de la valve 30 peut être réalisée de façon classique par exemple par l'intermédiaire d'interrupteurs commandés par un ou plusieurs poussoirs (non représentés au dessin), chaque actionnement d'un poussoir provoquant la commutation d'un état de commutation à un autre de la cellule auquel il est associé.

## Revendications

1. Ensemble d'affichage comprenant deux dispositifs d'affichage superposés respectivement supérieur (24) et inférieur (26), caractérisé en ce que le dispositif d'affichage supérieur (24) comprend une double structure formée d'une cellule d'affichage disposée (28) au-dessus d'une valve optique (30), ladite double structure étant agencée pour que ladite cellule (28) et ladite valve (30) soient transparentes dans un premier état pour rendre visible le dispositif d'affichage inférieur (26), et pour que la cellule (28) affiche une information et que la valve (30) soit opaque et masque au moins partiellement le dispositif d'affichage inférieur (26) dans un deuxième état, des moyens de commande fournissant une tension de commande à la cellule (28) et à la valve (30) pour les faire passer du premier état au deuxième état et inversement.

2. Ensemble d'affichage selon la revendication 1, caractérisé en ce que la cellule (28) et la valve optique (30) sont dans le premier état transparent en l'absence de tension appliquée par lesdits moyens de commande.

3. Ensemble d'affichage selon l'une quelconque des revendications 1 ou 2, caractérisé en ce que ladite cellule d'affichage (28) est une cellule à cristaux liquides choisie parmi les cellules du type nématique en hélice (TN), STN, Guest-Host, à biréfringence contrôlée électriquement (BCE), à gel nématique et texture cholestérique, ferroélectrique, à cristaux liquides dispersés dans un polymère.

4. Ensemble d'affichage selon l'une quelconque des revendications précédentes, caractérisé en ce que la valve optique (30) est formée d'une cellule du type nématique en hélice, d'un polariseur placé devant la cellule, d'une lame quart d'onde et d'un film cholestérique placés successivement derrière la cellule (28).

5. Ensemble d'affichage selon l'une quelconque des revendications 1 à 3, caractérisé en ce que la valve optique (30) est formée d'une cellule électrolytique.

6. Ensemble d'affichage selon l'une quelconque des revendications 1 à 3, caractérisé en ce que la valve optique (30) est formée d'une cellule électrocapillaire au mercure.

7. Ensemble d'affichage selon l'une quelconque des revendications 1 à 3 dans lequel la cellule (28) est du type diffusant à l'état commuté, et dans lequel la valve optique (30) est formée d'une cellule présentant un état transparent à l'état non commuté et opaque ou absorbant dans l'état commuté.

8. Ensemble d'affichage selon la revendication 7 dans lequel la cellule (28) est du type PDLC inverse, à gel nématique ou à diffusion dynamique et dans lequel la valve (30) est du type TN, STN, Guest-Host, à biréfringence contrôlée électriquement (BCE), ferroélectrique, ou du type PSCT.

9. Ensemble d'affichage selon l'une quelconque des revendications 1 à 2, caractérisé en ce que la valve optique (30) est dans le premier état en l'absence de tension appliquée par lesdits moyens de commande, et en ce que la valve optique (30) est formée d'un film cholestérique commutable.

10. Ensemble d'affichage selon l'une quelconque des revendications précédentes, caractérisé en ce que le dispositif d'affichage inférieur (26) est un dispositif d'affichage choisi parmi l'ensemble comprenant un dispositif analogique, numérique, une combinaison de ces derniers, et un élément décoratif.

11. Pièce d'horlogerie comprenant une boîte (2) fermée par une glace (22) et un fond (4) et dans laquelle est logé un mouvement d'horlogerie (6) associé à un dispositif d'affichage de grandeurs temporelles, caractérisée en ce qu'elle comprend un ensemble d'affichage selon l'une quelconque des revendications 1 à 8, ledit dispositif affichage inférieur (26) étant formé par ledit dispositif d'affichage de grandeurs temporelles, et ledit dispositif d'affichage supérieur (24) s'étendant entre la glace (22) et ledit dispositif d'affichage de grandeurs temporelles.

12. Pièce d'horlogerie selon la revendication 11, caractérisée en ce que ledit dispositif d'affichage de grandeurs temporelles comprend un cadran (18) et une aiguille des heures (16) et une aiguille des minutes (24) qui se déplacent au dessus du cadran (18).

13. Pièce d'horlogerie selon l'une quelconque des revendications 10 ou 12, caractérisée en ce que la glace (22) est formée par le dispositif d'affichage supérieur (24).
